# EUROPEAN PATENT SPECIFICATION

(11) **EP 3 361 092 B1**
(45) Date of publication and mention of the grant of the patent: **25.12.2019**
(21) Application number: 17202759.1
(22) Date of filing: 21.11.2017
(51) Int. Cl.: F03D 7/02, F03D 80/70, F03D 80/80, F16N 31/00

(54) **WIND TURBINE, LUBRICANT COLLECTION SYSTEM AND METHOD FOR REMOVING LUBRICANT**
WINDTURBINE, SCHMIERMITTELSAMMELSYSTEM UND VERFAHREN ZUM ENTFERNEN VON SCHMIERMITTEL
ÉOLIENNE, SYSTÈME DE COLLECTE DE LUBRIFIANT ET PROCÉDÉ D'ÉLIMINATION DE LUBRIFIANT

(30) Priority: 08.02.2017 DE 102017201992
(43) Date of publication of application: 15.08.2018
(73) Proprietor: Siemens Gamesa Renewable Energy A/S, 7330 Brande (DK)
(72) Inventor: Buezas, Julian, 2400 København NV (DK); Pecher, Arthur, 5500 Middelfart (DK)
(74) Representative: Aspacher, Karl-Georg

(56) References cited:
- DE-A1-102011 052 506
- KR-B1- 101 522 189
- US-A1- 2010 124 507
- US-A1- 2012 224 963

## Description

The present invention relates to a wind turbine comprising a tower, a nacelle, a gearing that couples the nacelle to the tower for adjusting the yaw angle of the nacelle with respect to the tower by rotating the nacelle around a yaw axis and a ring shaped collecting tray extending around the yaw axis to collect lubricant dripping from the gearing. Additionally the present invention relates to a method for removing lubricant collected in a lubricant collecting tray of a wind turbine.

It is advantageous for wind turbines to allow for an adjustment of the yaw angle of a nacelle. The yaw angle of the nacelle determines the yaw angle of the rotor and therefore the relative orientation of the axis of rotation of the rotor and the wind direction. Wind turbines typically contain one or more yaw motors that drive a gearing that couples the nacelle to the tower of the wind turbine. This gearing is also called yaw system. For example a gear-wheel that extends on the circumference of a tower can be attached to the tower and this gear-wheel can be coupled with one or more gear-wheels that are driven by motors provided in the nacelle or vice versa.

To reduce the wear of the gearing and to improve efficiency, a lubricant, especially grease, should be provided for the gearing. Lubricant can be added manually or by an automatic lubrication system. During the operation of the gearing some of this lubricant tends to drip off the gearing. This superfluous lubricant should be collected and removed occasionally. Therefore wind turbines often contain a lubricant collecting tray, also called grease tray, that is arranged below the gearing or below relevant parts of the gearing and collects the superfluous lubricant.

Space in the nacelle and/or the towers is often limited, since it is advantageous to use wind turbines with relatively small and light nacelles. The resulting design constraints can limit the access to the lubricant collecting tray, making it hard or impossible to remove the lubricant from certain parts of the lubricant tray. Since typically high viscosity lubricants are used in wind turbines, this can result in a collection of large amounts of lubricant in the hard to reach parts of the collecting tray which in turn can result in a spilling of the lubricant out of the collecting tray over time. To ensure a reliable performance of the lubricant collecting system it is therefore also necessary to remove lubricant from the hard to reach places. This can be time-consuming and cause downtimes for the wind turbine.

A grease collector that is connectable to a wind turbine nacelle is known from the document US 2012/224963 A1. Similar grease collectors that are mountable to a tower are described in the documents US 2010/124507 A1 and DE 10 2011 052506 A1. A lubricant collection unit installed inside a blade of a wind turbine is known from the document KR 101 522 189 B1.

The object of the present invention is therefore to improve the collection and removal of surplus lubricant in wind turbines.

This problem is solved by a wind turbine according to the initial description, wherein the collecting tray is supported to be rotatable around the yaw axis with respect to the tower and the nacelle.

By mounting the collecting tray rotatably, it is sufficient to allow an access to the lubricant collecting tray from one or few circumferential positions. The lubricant collected in this circumferential section can be removed and the collecting tray can be rotated afterwards to access a new circumferential section of the collecting tray to remove the lubricant and so on. It is therefore easily possible to access the full circumference of the collecting tray, even when the wind turbine is designed in such a way, that access is only possible from one or a few positions within the tower or the nacelle. While it is possible to provide means for an automatic rotation of the collecting tray, it is often sufficient to allow for a manual rotation of the tray. The tray can consist of multiple sections that are connected together, e. g. by bolting them together.

The wind turbine can comprise a ring shaped carrying member extending around the yaw axis that is fastened to the nacelle or the tower, wherein the collecting tray is rotatably supported by the carrying member. The carrying member can especially be fastened to a canopy of the nacelle. The fastening can be e. g. by screws or bolts. The carrying member can consist of multiple connected sections, especially circumferential sections. These sections can e. g. be screwed or bolted together. In an alternative embodiment it would be possible to support the collecting tray by multiple supporting members that are spaced circumferentially along the collecting tray. The ring shaped carrying member does however provide for a reliable support that allows for easy rotation.

The carrying member can consist of a bottom wall and inner and outer sidewalls, providing a ring shaped channel for supporting the collecting tray. The bottom can be flat. The sidewalls can be angled with respect to the bottom with an angle between 45 and 90°.

The rotation of the collecting tray can be blocked by a locking member. E. g. one or more cable ties can be used to block a rotation of the collecting tray with respect to the carrying member.

The collecting tray can consist of a bottom wall and inner and outer sidewalls, providing a ring shaped channel for collecting the lubricant. The shape of the collecting tray can match the shape of the carrying member. The bottom of the collecting tray can be flat. It can however be advantageous to provide a groove in the bottom wall of the collecting tray to allow for additional space for fixing members that fix the carrying member to a support structure of the tower or the nacelle. If for example the carrying member is fixed by screws or bolts, screw heads or bolt heads might vertically extend beyond the bottom of the carrying member. The groove in the bottom wall of the lubricant collecting tray can be designed to avoid contact between the collecting tray and the screw heads or bolt heads used for fixing the carrying member to the supporting structure.

The upper part of the outer sidewall of the collecting tray may comprise radially spaced through-holes and/or protrusions. These features make it easier for a user to grab and rotate the collecting tray.

The wind turbine can comprise a ring shaped sealing member that is attached to the tower or the nacelle and extends to the radially outward side of the inner sidewall and/or to the bottom wall of the collecting tray. The sealing member is preferably connected to the tower or the nacelle at a radially inward position with respect to the outer sidewall of the collecting tray. The sealing member can consist of multiple connected sections and/or it can be made from a flexible material. The use of a sealing member helps to ensure that surplus lubricant that drips from the gearing is fed to the lubricant collecting tray.

The wind turbine can be designed in such a way, that the radial extension of the gearing lies within the diameter of the outer sidewall. This helps to ensure that all the surplus lubricant is collected. In other words the outer sidewall can define the outer circumference of a cylinder, that extends in the direction of the yaw-axis, especially the vertical direction, beyond the collection tray, wherein the gearing lies within this cylinder.

A lubricant collection system for a yaw gearing of a wind turbine is described, wherein the yaw gearing couples a nacelle to a tower for adjusting the yaw angle of the nacelle with respect to the tower by rotating the nacelle around a yaw axis, wherein the lubricant collection system contains a ring shaped collecting tray extending around the yaw axis to collect lubricant dripping from the yaw gearing, wherein the collecting tray is supported to be rotatable around the yaw axis with respect to the tower and the nacelle.

The lubricant collection system can comprise a ring shaped carrying member extending around the yaw axis that can be fastened to the nacelle or the tower, wherein the collecting tray is rotatably supported by the carrying member.

The lubricant collection system can also be modified by the features discussed above with respect to the wind turbine according to the present invention.

Additionally the invention concerns a method for removing lubricant collected in a ring shaped lubricant collecting tray of a yaw gearing of a wind turbine extending around a yaw axis of the yaw gearing, comprising a repeated execution of the steps of rotating the collecting tray around the yaw axis to move a respective circumferential section of the collecting tray into a designed area of the nacelle or the tower and removing the lubricant from that section. The rotation ca be a rotation with respect to the tower and the nacelle. The method can especially be used to remove lubricant from a wind turbine or a lubricant collection system according to the present invention. The removal of the lubricant and/or the rotation of the collecting tray can be done manually.

The above and other aspects, features and other advantages of the present invention will be more clearly understood from the following detailed description taking in conjunction with the accompanying drawings, which show schematically:
- Fig. 1: a wind turbine according the present invention,
- Fig. 2: a detail view of the wind turbine shown in Fig. 1 also showing a lubricant collection system,
- Fig. 3: a detail view from a different perspective showing the gearing and the lubricant collection system of the wind turbine shown in Fig. 1, and
- Fig. 4: an exploded view of the lubricant collection system shown in Figs. 2 and 3.

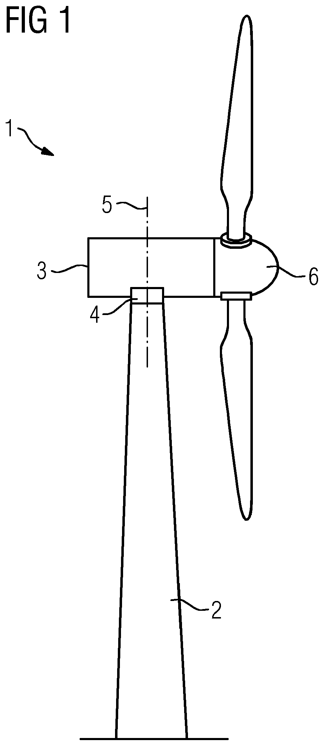

Fig. 1 shows a wind turbine 1 comprising a tower 2, a rotor 6, a nacelle 3 and a gearing 4 that couples the nacelle 3 to the tower 2 for adjusting the yaw angle of the nacelle 3 with respect to the tower 2 by rotating the nacelle 3 around a yaw axis 5.

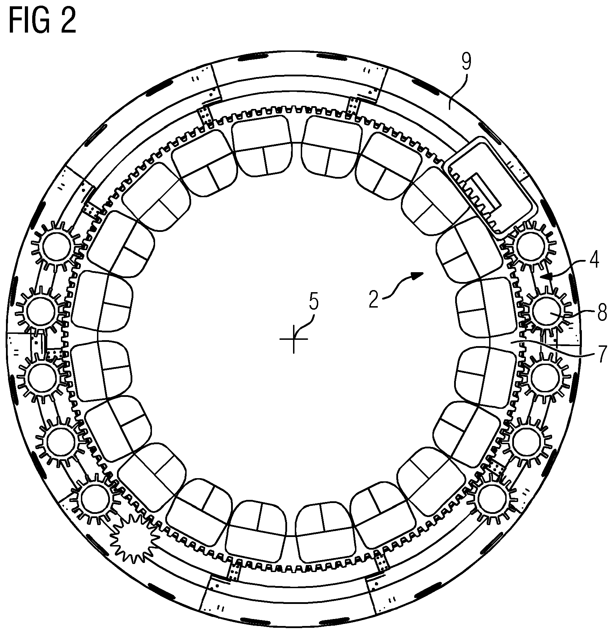

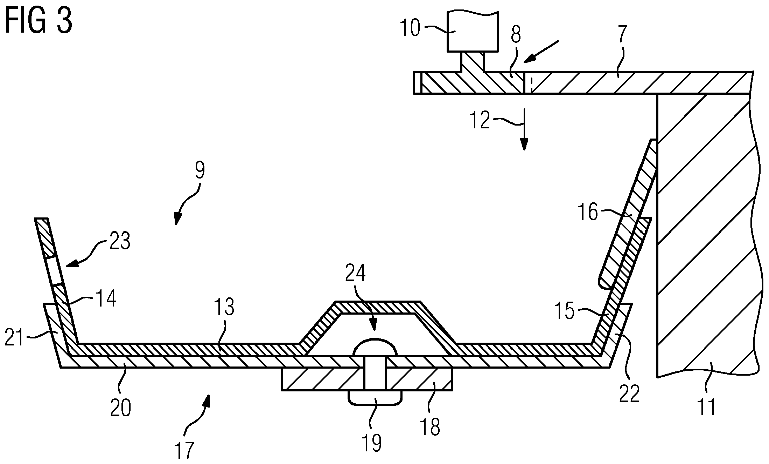

The gearing 4 is shown in detail in Figs. 2 and 3. A circumferential gear-wheel 7 that is also called yaw ring is attached to the wall 11 of the tower 2. The gear-wheel 7 interacts with several gear-wheels 8 that are connected via a respective motor 10 to the nacelle 3, especially to a canopy or a supporting structure of the nacelle 3. The gear-wheels 8 and the motors 10 are part of the yaw drive that can also comprise additional components such as brakes. By activating this motors 10 the gear-wheels 8 are moved along the circumference of the gear-wheel 7, resulting in a rotation of the nacelle 3 with respect to the tower 2 around the yaw axis 5.

A lubricant is used to reduce the friction between the gear-wheels 7 and 8. Over the cause of the operation of the wind turbine 1 a certain part of this lubricant drips down from the gearing 4 as indicated by the arrow 12 in Fig. 3.

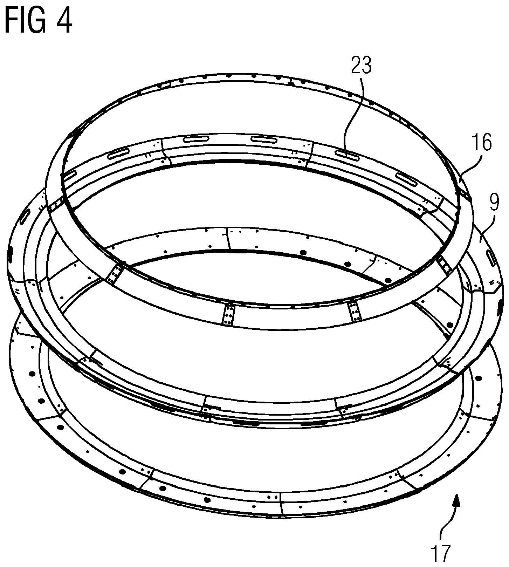

To collect the surplus lubricant, a ring shaped collecting tray 9 is provided below the gearing 4. The collecting tray 9 extends around the yaw axis 5 to collect the lubricant dripping from the gearing 4. The collecting tray 9 comprises the bottom wall 13 and two sidewalls 14, 15, providing a ring shaped channel for collecting the lubricant. The general shape of the lubricant collecting tray 9 is also shown in Fig. 4, that shown an exploded view of the components of the lubricant collection system. The lubricant collecting tray can consist of several circumferential sections that can be screwed or bolted together or connected in a different fashion.

Surplus lubricant collects in the lubricant collecting tray 9 and needs to be removed before there is an overflow. This is typically done manually. Due to space constraints the lubricant collecting tray is often arranged immediately below the gearing 4. The access to the lubricant collecting tray 9 can therefore be blocked by the gearing 4, the yaw motors 10 driving the gear-wheels 8 and/or other components of the wind turbine.

To allow for a removal of lubricant from all sections of the lubricant collecting tray 9, the lubricant collecting tray 9 is supported to be rotatable around the yaw axis 5 with respect to the tower 2 and the nacelle 3. The support is realised by a ring shaped carrying member 17 that is shown in Figs. 3 and 4. The ring shaped carrying member 17 extends around the yaw axis 5 and is fastened to the nacelle 3 or the tower 2 via a support structure 18. A screw or bolt 19 can be used to connect the ring shaped carrying member 17 to the support structure 18. The support structure can be the canopy of the nacelle. The bottom wall 13 of the lubricant collecting tray has a groove 24 to avoid friction between the collecting tray 9 and the screw or bolt 19 used for fixing the carrying member 17 to the support structure 18.

The carrying member 17 can consist of a bottom wall 20 and inner and outer sidewalls 21, 22, to provide a ring shaped channel for supporting the collecting tray 9. As shown in Fig. 4 the ring shaped carrying member 17 can also be made up from several connected sections to allow for easier transport and assembly.

The surplus lubricant can be removed from the ring shaped collecting tray 9 by repeatedly rotating the collecting tray 9 around the yaw axis 5 to move a respective circumferential section of the collecting tray 9 into a designated area of the nacelle or the tower and removing the lubricant from that section. The removal of the lubricant and/or the rotation of the collecting tray can be done manually by a user. To facilitate the manual rotation of the collecting tray 9 the collecting tray 9 comprises radially spaced through-holes 23. Additionally or alternatively protrusions could be provided to allow for easy gripping of the collecting tray 9 by a user.

The dimensions and positioning of the lubricant collecting tray 9 are chosen such that essentially all surplus lubricant can be collected by the collecting tray 9. The radial extension of the gearing therefore lies within the diameter of the outer sidewall 14. To avoid a spillage of lubricant between the collecting tray 9 and the tower wall 11, a ring shaped sealing member 16 is provided that is shown in Figs. 3 and 4. The sealing member 16 is attached to the tower 2, especially the wall 11 of the tower 2, on the radially inward end of the sealing member 16. The radially outward end extends to the radially outward side of the inner sidewall 15 of the collecting tray 9. As shown in Fig. 4, the sealing member can be made up from several connected circumferential sections. This allows for easier transport and assembly.

The use of a rotatable collecting tray 9 allows for a reliable collection of surplus lubricant and for easy access to all circumferential sections of the collecting tray 9 for removing the surplus lubricant. The easy removal of surplus lubricant reduces the time required for this operation and therefore the necessary downtimes for the wind turbine.

Although the present invention has been described in detail with reference to the preferred embodiment, the present invention is not limited by the disclosed examples from which the skilled person is able to derive other variations without departing from the scope of the invention.

## Claims

1. Wind turbine comprising a tower (2), a nacelle (3), a gearing (4) that couples the nacelle (3) to the tower (2) for adjusting the yaw angle of the nacelle (3) with respect to the tower (2) by rotating the nacelle (2) around a yaw axis (5) and a ring shaped collecting tray (9) extending around the yaw axis (5) to collect lubricant dripping from the gearing (4), **characterized in that** the collecting tray (9) is supported to be rotatable around the yaw axis (5) with respect to the tower (2) and the nacelle (3).

2. Wind turbine according to claim 1, **characterized in that** it comprises a ring shaped carrying member (17) extending around the yaw axis (5) that is fastened to the nacelle (3) or the tower (2), wherein the collecting tray (9) is rotatably supported by the carrying member (17).

3. Wind turbine according to claim 2, wherein the carrying member (17) consists of a bottom wall (20) and inner and outer sidewalls (21, 22), providing a ring shaped channel for supporting the collecting tray (9).

4. Wind turbine according to one of the preceding claims, wherein the collecting tray (9) consists of a bottom wall (13) and inner and outer sidewalls (14, 15), providing a ring shaped channel for collecting the lubricant.

5. Wind turbine according to claim 4, wherein an upper part of the outer sidewall (14) of the collecting tray (9) comprises radially spaced through-holes (23) and/or protrusions.

6. Wind turbine according to claim 4 or 5, **characterized in that** it comprises a ring shaped sealing member (16) that is attached to the tower (2) or the nacelle (3) and extends to the radially outward side of the inner sidewall (15) and/or to the bottom wall (13) of the collecting tray (9).

7. Wind turbine according to one of the claims 4 to 6, **characterized in that** the radial extension of the gearing (4) lies within the diameter of the outer sidewall (14) of the collecting tray (9).

8. Method for removing lubricant collected in a ring shaped lubricant collecting tray (9) of a yaw gearing (4) of a wind turbine (1) according to claim 1 extending around a yaw axis (5) of the yaw gearing (4), comprising a repeated execution of the steps of rotating the collecting tray (9) around the yaw axis (5) to move a respective circumferential section of the collecting tray (9) into a defined area of the nacelle (3) or the tower (2) and removing the lubricant from that section.

## Patentansprüche

1. Windturbine mit einem Turm (2), einer Gondel (3), einem die Gondel (3) mit dem Turm (2) koppelnden Getriebe (4) zum Verstellen des Gierwinkels der Gondel (3) in Bezug zum Turm (2) durch Drehen der Gondel (2) um eine Gierachse (5) und einer um die Gierachse (5) herum verlaufenden, ringförmigen Auffangwanne (9) zum Auffangen von aus dem Getriebe (4) tropfendem Schmiermittel, **dadurch gekennzeichnet, dass** die Auffangwanne (9) so gelagert ist, dass sie in Bezug zu dem Turm (2) und der Gondel (3) um die Gierachse (5) herum drehbar ist.

2. Windturbine nach Anspruch 1, **dadurch gekennzeichnet, dass** sie ein ringförmiges Trägerelement (17) umfasst, das um die Gierachse (5) herum verläuft und an der Gondel (3) oder dem Turm (2) befestigt ist, wobei die Auffangwanne (9) an dem Trägerelement (17) drehbar gelagert ist.

3. Windturbine nach Anspruch 2, wobei das Trägerelement (17) aus einer Bodenwand (20) und einer inneren und einer äußeren Seitenwand (21, 22) besteht und so einen ringförmigen Kanal zum Lagern der Auffangwanne (9) bereitstellt.

4. Windturbine nach einem der vorhergehenden Ansprüche, wobei die Auffangwanne (9) aus einer Bodenwand (13) und einer inneren und einer äußeren Seitenwand (14, 15) besteht und so einen ringförmigen Kanal zum Auffangen des Schmiermittels bereitstellt.

5. Windturbine nach Anspruch 4, wobei ein oberer Teil der äußeren Seitenwand (14) der Auffangwanne (9) radial beabstandete Durchgangslöcher (23) und/oder Vorsprünge umfasst.

6. Windturbine nach Anspruch 4 oder 5, **dadurch gekennzeichnet, dass** sie ein ringförmiges Dichtungselement (16) umfasst, das an dem Turm (2) oder der Gondel (3) angebracht ist und zur radial außenliegenden Seite der inneren Seitenwand (15) und/oder zur Bodenwand (13) der Auffangwanne (9) hin verläuft.

7. Windturbine nach einem der Ansprüche 4 bis 6, **dadurch gekennzeichnet, dass** die radiale Ausdehnung des Getriebes (4) innerhalb des Durchmessers der äußeren Seitenwand (14) der Auffangwanne (9) liegt.

8. Verfahren zum Entfernen von Schmiermittel, welches in einer ringförmigen Schmiermittelauffangwanne (9) eines Giergetriebes (4) einer Windturbine (1) nach Anspruch 1 aufgefangen wird, die um eine Gierachse (5) des Giergetriebes (4) herum verläuft, wobei das Verfahren ein wiederholtes Durchführen des Drehens der Auffangwanne (9) um die Gierachse (5) zum Bewegen eines jeweiligen Umfangsabschnitts der Auffangwanne (9) in einen vorgegebenen Bereich der Gondel (3) oder des Turms (2) und Entfernen des Schmiermittels aus diesem Abschnitt umfasst.

## Revendications

1. Éolienne comprenant une tour (2), une nacelle (3), une transmission (4) qui couple la nacelle (3) à la tour (2) pour ajuster l'angle de lacet de la nacelle (3) par rapport à la tour (2) par la rotation de la nacelle (2) autour d'un axe de lacet (5) et un plateau de collecte en forme de bague (9) s'étendant autour de l'axe de lacet (5) pour collecter du lubrifiant gouttant de la transmission (4), **caractérisé en ce que** le plateau de collecte (9) est porté pour être apte à tourner autour de l'axe de lacet (5) par rapport à la tour (2) et à la nacelle (3).

2. Éolienne selon la revendication 1, **caractérisée en ce qu'**elle comprend un élément porteur en forme de bague (17) s'étendant autour de l'axe de lacet (5) qui est fixé à la nacelle (3) ou à la tour (2), dans laquelle le plateau de collecte (9) est porté de manière rotative par l'élément porteur (17).

3. Éolienne selon la revendication 2, dans laquelle l'élément porteur (17) est constitué d'une paroi inférieure (20) et de parois latérales interne et externe (21, 22) fournissant un canal en forme de bague pour porter le plateau de collecte (9).

4. Éolienne selon l'une des revendications précédentes, dans laquelle le plateau de collecte (9) est constitué d'une paroi inférieure (13) et de parois latérales interne et externe (14, 15) fournissant un canal en forme de bague pour collecter le lubrifiant.

5. Éolienne selon la revendication 4, dans laquelle une partie supérieure de la paroi latérale externe (14) du plateau de collecte (9) comprend des trous traversants (23) radialement espacés et/ou des saillies.

6. Éolienne selon la revendication 4 ou 5, **caractérisée en ce qu'**elle comprend un élément d'étanchéité en forme de bague (16) qui est attaché à la tour (2) ou à la nacelle (3) et s'étend vers le côté radialement vers l'extérieur de la paroi latérale interne (15) et/ou vers la paroi inférieure (13) du plateau de collecte (9).

7. Éolienne selon l'une des revendications 4 à 6, **caractérisée en ce que** l'extension radiale de la transmission (4) se situe à l'intérieur du diamètre de la paroi latérale externe (14) du plateau de collecte (9).

8. Procédé d'élimination du lubrifiant collecté dans un plateau de collecte de lubrifiant en forme de bague (9) d'une transmission en lacet (4) d'une éolienne (1) selon la revendication 1 s'étendant autour d'un axe de lacet (5) de la transmission en lacet (4), comprenant une exécution répétée des étapes de rotation du plateau de collecte (9) autour de l'axe de lacet (5) pour déplacer une section circonférentielle respective du plateau de collecte (9) dans une zone définie de la nacelle (3) ou de la tour (2) et d'élimination du lubrifiant de cette section.
